Europäisches Patentamt

European Patent Office

Office européen des brevets

(19)

(11) **EP 0 991 880 B1**

(12) **FASCICULE DE BREVET EUROPEEN**

(45) Date de publication et mention
de la délivrance du brevet:
**06.11.2002 Bulletin 2002/45**

(51) Int Cl.⁷: **F16H 61/02**

(21) Numéro de dépôt: **98933731.6**

(22) Date de dépôt: **26.06.1998**

(86) Numéro de dépôt international:
**PCT/FR98/01360**

(87) Numéro de publication internationale:
**WO 99/001684 (14.01.1999 Gazette 1999/02)**

(54) **PROCEDE DE CONTROLE DES PHASES DE RETROGRADAGE DE TRANSMISSION AUTOMATIQUE**

VERFAHREN ZUM STEUERN DER ZURÜCKSCHALTUNGSGÄNGE BEI AUTOMATIKGETRIEBEN

METHOD FOR CONTROLLING AUTOMATIC TRANSMISSION DOWNSHIFT PHASES

(84) Etats contractants désignés:
**CH DE ES GB IT LI PT SE**

(30) Priorité: **02.07.1997 FR 9708325**

(43) Date de publication de la demande:
**12.04.2000 Bulletin 2000/15**

(73) Titulaires:
• **Renault s.a.s.**
**92100 Boulogne Billancourt (FR)**
• **AUTOMOBILES PEUGEOT**
**75116 Paris (FR)**
• **AUTOMOBILES CITROEN**
**92200 Neuilly-sur-Seine (FR)**

(72) Inventeurs:
• **TAFFIN, Christian**
**F-78400 Chatou (FR)**
• **MESTRES, Robert**
**F-59880 Saint Sambre (FR)**

(56) Documents cités:
**FR-A- 2 545 567**     **US-A- 5 010 788**
**US-A- 5 016 495**     **US-A- 5 624 351**

EP 0 991 880 B1

**Description**

L'invention concerne les transmissions automatiques de véhicules à rapports étagés. Elle concerne plus précisément un procédé de contrôle des rétrogradages des rapports de vitesses, qui permet d'améliorer l'agrément de conduite et la sécurité du véhicule, en agissant sur la capacité de freinage ou d'accélération d'un véhicule à transmission automatique.

Dans la plupart des méthodes de gestion des changements de rapports en mode automatique, les changements de rapports sont décidés en fonction de la vitesse du véhicule et de la charge du moteur. Le plus souvent, ces critères sont traduits sous forme de lois de changement de rapports, commodément visualisées dans un plan $V_{veh} / \alpha_{pap}$, Vveh désignant la vitesse du véhicule, et $\alpha$pap l'angle d'ouverture de papillon, ou plus généralement, l'ouverture de l'organe de régulation de l'admission du combustible au moteur.

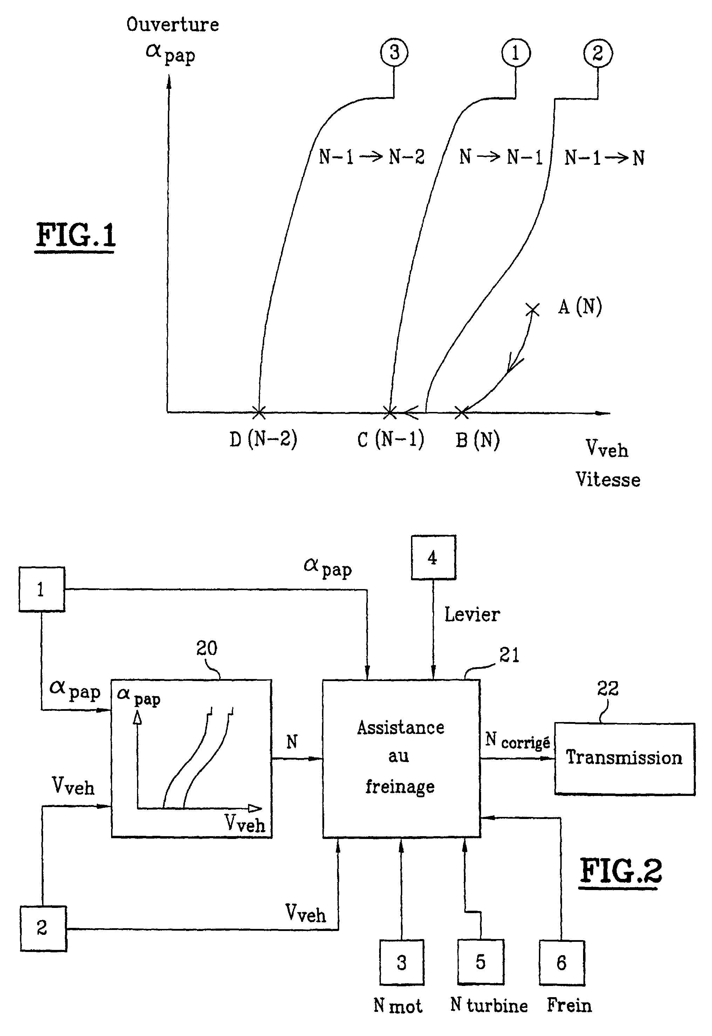

Un exemple connu de lois de changement de rapports est proposé en figure 1, dans laquelle les courbes 1 et 3 représentent respectivement les courbes de rétrogradages de N vers N-1 et de N-1 vers N-2, et la courbe 2 représente la courbe de passage montant de N-1 vers N, N étant le rapport courant.

La demande de brevet français FR2545567 enseigne une transmission automatique à rapports étagés permettant d'inhiber les passages intempestifs au rapport de vitesse supérieur lors d'une décélération rapide après une accélération. Selon cette demande, le passage au rapport supérieur est bloqué tant que des conditions déterminées sont détectées. Ces conditions sont représentées par une courbe d'accélération négative et une courbe d'ouverture croissante. Cependant, cette transmission ne permet pas de procurer un frein moteur lors des phases de décélération et d'obtenir un potentiel d'accélération important dans certaine situation de roulage.

Comme cela va apparaître dans ce qui suit, les procédés connus de contrôle de changements de rapports de boites automatiques à rapports étagés présentent des inconvénients, lorsqu'il s'agit de descendre les rapports, aussi bien en cas de freinage qu'en cas d'accélération.

On se réfère tout d'abord aux figures 1 à 3, et en particulier à la Figure 1 pour la discussion du problème de l'assistance au freinage lors des rétrogradages. Supposons que le conducteur roule à vitesse stabilisée sur le quatrième rapport (on suppose que N = 4) et que, pour une certaine raison, il soit contraint de ralentir son véhicule de façon sensible par freinage. Des rétrogradages vont bien entendu se réaliser, mais de la façon suivante : partant du point A (vitesse stabilisée sur le rapport N = 4), le conducteur va progressivement relâcher l'accélérateur pour ensuite freiner. Il va donc passer de A en B, toujours sur le même rapport N = 4. Puisqu'il freine, la vitesse du véhicule va chuter et le point courant va croiser successivement les courbes de rétrogradages 1 et 3 aux points C et D. En C a lieu le rétrogradage de N vers N-1 et en D a lieu le second rétrogradage de N-1 vers N-2 (dans l'exemple choisi: de la troisième vers la seconde vitesse).

Cette analyse montre bien que, quelle que soit l'intensité du freinage, quelles que soient les conditions de roulage (descente, plat) et quel que soit le style de conduite du conducteur, les rétrogradages auront lieu immuablement aux points C et D. Or cette situation n'est pas celle voulue par le conducteur, comme le montre bien la façon de conduire d'un conducteur décidant de changer de rapport sur une voiture à boîte dite manuelle, sur laquelle les changements de rapport peuvent être effectués dans des conditions très variables. Bien entendu, le conducteur conduisant un véhicule équipé d'une boîte automatique a toujours la possibilité de rétrograder à volonté par action sur le levier de vitesses, mais il y a dans ce cas perte de la prestation dite "automatique".

Un premier but de la présente invention est donc de proposer un procédé d'assistance au freinage par rétrogradages anticipés des transmissions automatiques à rapports étagés, permettant d'adapter les décisions de changement des rapports dans les phases de freinage du véhicule à une pluralité de paramètres, et capable d'éliminer les inconvénients de l'état de la technique.

En liaison avec la problématique de l'assistance au freinage, l'invention a également pour but de procurer du frein moteur supplémentaire au véhicule, de rétrograder sur un "bon" rapport en entrée de virage, et globalement d'apporter davantage d'agrément de conduite lors des phases de décélération du véhicule.

Selon un autre aspect, l'invention concerne un procédé de contrôle des phases de rétrogradages des transmissions automatiques à rapports étagés, permettant d'assurer la sécurité de conduite en phase d'accélération, par exemple lors des dépassements du véhicule, ou lors des situations de roulage nécessitant un potentiel d'accélération important.

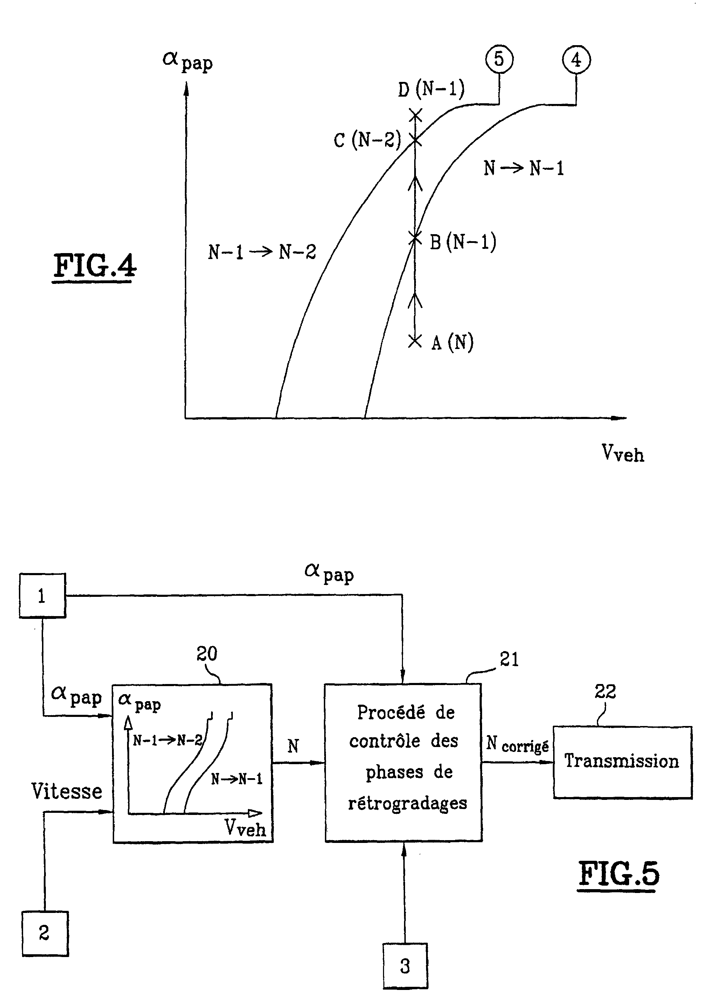

Afin d'expliquer plus en détail cette problématique, on se réfère à la figure 4. Dans cette figure est proposé un exemple de loi de changements de rapports, dans lequel les courbes 4 et 5 représentent les courbes de passage descendant respectivement de N vers N-1 et de N-1 vers N-2, N étant le rapport courant de la transmission.

Supposons que le conducteur roule à vitesse stabilisée sur le quatrième rapport (on suppose que N = 4), on se trouve donc au point A dans le plan $\alpha$pap, Vveh décrit précédemment. Si pour une raison qui lui est propre, le conducteur souhaite accélérer fortement (en cas de dépassement d'un autre véhicule par exemple), il a besoin de toute la puissance nécessaire aux roues, pour obtenir le potentiel d'accélération maximum. Ainsi, si l'on se réfère à la Figure 4, à l'ouverture du papillon, le point courant dans le plan $\alpha$pap, Vveh va parcourir le segment orienté A D, croisant successivement les courbes de rétrogradages 4 et 5. Au point B, le rapport N-1 va être adapté, et au point C le rapport N-2 sera ensuite adapté par la transmission. On observe donc une séquence de N vers N-1 et de N-1 vers N-2 dans l'enchaînement des rapports. Cette séquence est non souhaitée du point de vue de la sécurité, car elle retarde de façon notoire l'apparition de la puissance maximum à la roue : le temps d'effectuer les deux changements de rapport peut être trop élevé et peut être de quelques secondes selon les transmissions.

Sous ce second aspect, l'invention a donc pour but de fournir un procédé de contrôle des phases de rétrogradages, permettant d'éviter sous certaines sollicitations de l'accélérateur, les enchaînements N vers N-1 et N-1 vers N-2, qui nuisent à la sécurité du véhicule, de façon à réaliser directement le rétrogradage N vers N-2 (saut de rapport), qui procure instantanément le maximum de puissance aux roues motrices.

Afin de résoudre les problèmes posés par les rétrogradages dans des conditions de freinage ou d'accélération tel qu'expliqué ci-dessus, l'invention prévoit des procédés de gestion correspondants des rétrogradages.

Pour gérer les freinages, l'invention concerne donc

un procédé de contrôle des rétrogradages des transmissions automatiques, caractérisé en ce qu'il consiste à :

- déterminer des conditions dans lesquelles le rétrogradage passe d'un régime normal en fonction de lois de passage prédéterminées, à un régime spécial de rétrogradage, et détecter le passage audit régime spécial;
- en cas de détection du passage au régime spécial, rétrograder en passant du rapport courant (N) à un rapport inférieur, et bloquer ce rapport inférieur jusqu'à la disparition du régime spécial de rétrogradage.

Selon d'autres caractéristiques du procédé, il comporte les étapes consistant à :

a) pour déterminer des conditions dans lesquelles le rétrogradage ne se fait plus selon les lois de passage automatique normales de la boite de vitesse, mais selon un régime spécial, on utilise une valeur limite (N_turb_max) de régime de turbine du convertisseur de couple maximal, en-dessous de laquelle commence ledit régime spécial;
b) Lorsqu'au freinage le régime de la turbine devient inférieur à ladite valeur limite, on effectue un rétrogradage anticipé d'un rapport de façon à passer du rapport N au rapport N-1, de sorte que le rétrogradage anticipé participe à l'effet de freinage.

- de préférence, la valeur limite de régime de turbine est déterminée en logique floue, en tenant compte de la décélération du véhicule représentative de l'intensité du freinage, de la durée du freinage, d'une grandeur représentative du style de conduite du conducteur, et d'une grandeur représentative de la déclivité de la route.

- En outre, dès que la décélération du véhicule atteint un certain niveau prédéterminé, on calcule la distance parcourue par le véhicule, et pour sortir du régime spécial de rétrogradage, on débloque le rapport courant, soit lorsque le véhicule a parcouru une certaine distance prédéterminée avec l'ouverture ($\alpha$pap) de l'organe de régulation de l'admission de combustible au moteur restée stable, ou lorsque le régime de rotation du moteur devient trop élevé, ou lorsque la courbe de rétrogradage N/N-1 est croisée, ou encore lorsque le conducteur actionne manuellement le levier de vitesses pour sélectionner un rapport supérieur.

En second lieu, afin de résoudre les problèmes posés par les rétrogradages à des fins d'accélération du véhicule, l'invention concerne un procédé de contrôle des rétrogradages selon l'une quelconque des revendications précédentes, et utilisé à des fins d'assistance à l'accélération, caractérisé en ce qu'il comporte des étapes consistant à :

a) au croisement d'une courbe de rétrogradage, lancer une première temporisation (Ta) de courte durée, pendant laquelle le rétrogradage est inhibé et le rapport courant N est conservé;
b) pendant ladite première temporisation (Ta), analyser la stabilité de l'accélérateur ou de l'angle de papillon ($\alpha$pap) en fonction du temps;
c) en cas de stabilité supérieure à un seuil prédéterminé, sélectionner le rapport qui correspond au point courant dans le plan ($\alpha$pap, vitesse du véhicule), sinon, lancer une seconde temporisation ($T_{instable}$), pendant laquelle le rapport N est toujours conservé;

- de préférence, la seconde temporisation ($T_{instable}$) est maintenue et le rapport N conservé, tant que l'instabilité ($|\Delta\alpha_{pap}|$) est comprise entre un seuil bas et un seuil haut d'instabilité prédéterminés.
- lorsque la seconde temporisation ($T_{instable}$) est écoulée, le rapport correspondant au point courant dans le plan ($\alpha$pap, Vveh) de la cartographie des changements de rapports selon le régime normal est sélectionné.
- de préférence, le blocage pour instabilité de l'angle d'ouverture de papillon est prioritaire par rapport au blocage résultant de la temporisation d'attente,

L'invention concerne également une transmission automatique mettant en oeuvre le procédé ci-dessus de contrôle des rétrogradages des rapports, ainsi qu'un véhicule automobile à boîte de vitesse automatique à rapports étagés, pourvu d'une telle transmission automatique.

On se réfère à la Figure 4 pour expliquer plus en détail les inconvénients des procédés de rétrogradages actuels. Si le conducteur enfonce rapidement l'accélérateur à partir du point A, par exemple en quatrième, il va croiser la courbe de rétrogradage 4. Mais comme il enfonce rapidement l'accélérateur, le rétrogradage est inhibé et une temporisation $T_{instable}$ est lancée, et elle restera initialisée tant que l'instabilité de $\alpha$pap sera détectée. Ainsi, lorsque le point courant se stabilise au point D, le rapport N-2 sera engagé et grâce à l'invention, le séquencement N vers N-1 et N-1 vers N-2 aura été évité, ce qui assure la sécurité lors des manoeuvres de dépassement, ainsi que la vivacité de réaction de la transmission.

L'invention concerne également une transmission automatique à rapports étagés mettant en oeuvre le procédé de contrôle des rétrogradages ayant les caractéristiques décrites précédemment, ainsi qu'un véhicule incorporant une telle transmission automatique.

L'invention sera mieux comprise et d'autres avantages de l'invention apparaîtront à la lecture de la description suivante faite à titre d'exemple non limitatif et aux dessins annexés, dans lesquels :

- la Figure 1 représente dans le plan $\alpha$pap/Vveh, un cycle caractéristique du problème de non assistance au freinage des transmissions automatiques gérées par les cartographies classiques de passage,
- la Figure 2 représente une vue schématique partielle d'un véhicule automobile mettant en oeuvre le procédé d'assistance au freinage en logique floue, selon l'invention;
- la Figure 3 représente le tableau comportant les règles floues permettant de calculer la valeur N-turbine-max;
- la Figure 4 représente dans un graphe de l'angle d'ouverture du papillon des gaz en fonction de la vitesse du véhicule, un cycle caractéristique du problème de l'enchaînement des rétrogradages lors des enfoncements rapides de l'accélérateur ;
- la Figure 5 représente une vue schématique partielle d'un véhicule automobile mettant en oeuvre le procédé de contrôle des rétrogradages en phase d'accélération selon l'invention.

On se réfère à la figure 2 pour expliquer plus en détail le procédé de contrôle de rétrogradage à des fins d'assistance au freinage. A partir des informations d'ouverture de papillon $\alpha$ pap, issue du capteurs 1 associé au moteur et vitesse du véhicule $V_{veh}$, issue du capteur 2 associé au véhicule, le bloc fonctionnel 20 détermine de façon connue en soi, une proposition de rapport N par une méthode de gestion des rapports cartographique ou éventuellement autre. Cette proposition de rapport N est soumise au procédé d'assistance au freinage, schématisé par le bloc 21. De ce dernier sort une consigne de rapport N corrigé qui est effectivement appliqué à la transmission 22. Le rapport N corrigé est déterminé en fonction du rapport N issu du bloc 20 et des informations $\alpha$pap, $V_{veh}$ (issues des capteurs 1 et 2), $N_{mot}$ qui est le régime de rotation du moteur issu du capteur 3, N-turbine qui est le régime de rotation de la turbine du convertisseur, issu du capteur 5, de la position du levier de sélection des vitesses 4, et du contact de frein issu du capteur 6.

On remarquera que le capteur 5 de vitesse de turbine n'est pas absolument nécessaire car N-turbine pourrait être aisément recalculée à partir de la vitesse du véhicule et du rapport de transmission courant.

Le procédé de rétrogradage anticipé qui fait l'objet de la présente invention peut être réalisé sous forme de fonction qui a des conditions d'entrée, des actions et des conditions de sortie. Pour la présente application, les conditions d'entrée dans la fonction qui génèrent de l'assistance au freinage par rétrogradages anticipés, sont les suivantes :

- la position du levier de vitesses est telle que les rapports sont décidés de façon automatique (position généralement appelée "drive" en terminologie anglo-saxonne);
- N-turbine < N-turbine-max, condition qui signifie que le régime de rotation de turbine devient trop faible compte tenu de la situation de conduite (besoin de frein moteur) ;
- le conducteur freine (contact de frein actif).

Lorsque ces conditions sont réunies, la fonction demande à la transmission le rétrogradage d'un rapport (on passe à N corrigé = N-1). Lorsque le rétrogradage est réalisé et si les conditions d'entrée ci-dessus demeurent valides, un second rétrogradage peut être décidé (N corrigé = N-2). N-turbine-max est donc un seuil maximal de vitesse de turbine qui est déterminé en logique floue à partir des informations suivantes :

1. de la décélération du véhicule $\gamma_{veh}$ obtenue par dérivation et filtrage de la vitesse de véhicule $V_{veh}$,
2. du temps de freinage, qui s'incrémente à partir de la valeur zéro dès que le contact de frein s'active, appelé "temps-frein",
3. de la déclivité de la route qui est déterminée classiquement par la formulation suivante :

$$\text{force-DIF} = F_{mot} - F_{résistant} - M.\gamma_{veh},$$

où :

- $F_{mot}$ est la force motrice aux roues,
- $F_{résistant}$ est l'ensemble des forces de résistance à l'avancement (aérodynamique et résistance au roulement),
- M est la masse du véhicule à vide,

- force-DIF deviendra successivement nul sur route plane et véhicule non chargé, positif sur route montante ou véhicule chargé, négatif sur route descendante.

4. Enfin, la grandeur N_Turbine_max dépend aussi d'une grandeur classifiante représentative du style de conduite du conducteur. On peut noter cette grandeur PRG-conducteur (ou programme conducteur) qui classifie par exemple le style de conduite du conducteur en trois zones dites ECO (économique), MEDIUM (normal) ou sport, qui correspondent respectivement à des styles de conduite économique, normal ou sportif du conducteur.

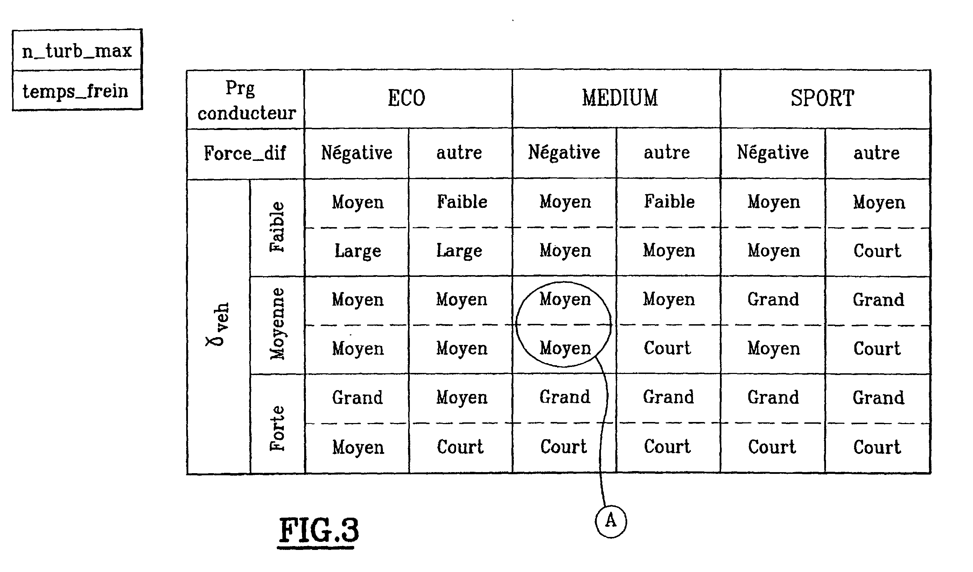

A titre indicatif, les règles floues utilisées pour la détermination du seuil maximal en régime de turbine N-turbine-max sont décrites dans le tableau de la Figure 3. Ces règles ne constituent qu'un exemple de réalisation. Le choix des règles floues relève de l'expérience de mise au point.

On se réfère à la Figure 3. Ce tableau exprime la conclusion floue de la détermination en logique floue de N_turbine_max en fonction ce tous les paramètres d'entrée. Il signifie par exemple que pour la case entourée indiquée par A, si (Prg_Conducteur est MEDIUM) et si (Force_dif est Négative) et si ($\gamma$veh est Moyenne) et si (temps_frein est Moyen) alors le régime N_turb_max est Moyen.

Lorsque le rétrogradage d'un rapport est décidé (conditions d'entrée dans la fonction validées), le rapport est maintenu. La sortie de cette situation est déterminée par des conditions de sortie qui sont comme suit. La sortie de la fonction d'assistance au freinage aura lieu si l'une des conditions suivantes devient valide :

- $N_{mot} \geq$ seuil-$N_{mot}$-haut, indiquant un sur régime moteur, ou
- le conducteur actionne le levier de vitesses pour obtenir un rapport montant, ou
- la courbe de rétrogradage N corrigé + 1 vers N corrigé est croisée, ou
- le véhicule a parcouru une certaine distance.

La distance est calculée à partir de la vitesse du véhicule par intégration dès que le véhicule roule à vitesse constante ou ré-accélère.

On va maintenant expliquer plus en détail le procédé de contrôle des rétrogradages à des fins d'accélération, en se référant à la Figure 5. A partir des informations : $\alpha_{pap}$ issue du capteur 1 associé au moteur et vitesse du véhicule Vveh issue du capteur 2, le bloc fonctionnel 20 détermine, par une méthode cartographique connue, dans le plan $\alpha_{pap}/V_{veh}$, le rapport N qu'il faudrait appliquer à la transmission automatique schématisée par le bloc 22. Le procédé de contrôle des phases de rétrogradages permet de bloquer temporairement le rapport N, et ce, compte tenu de l'information supplémentaire "kick down", issue du capteur 3. Ce même dispositif 21 détermine une proposition de rapport N corrigé, qui est ensuite effectivement appliquée à la transmission 22.

Selon une des caractéristiques de la présente invention, le procédé de contrôle des phases de rétrogradages à des fins d'accélération comporte les deux fonctions suivantes :

     F1 : blocage par temporisation d'attente,
     F2 : blocage résultant d'une instabilité de l'angle d'ouverture du papillon $\alpha_{pap}$.

La fonction F2 est prioritaire par rapport à la fonction F1. F1 consiste, lorsque F2 n'est pas active et qu'un rétrogradage est demandé par les lois de passage, et si le « kick down » est non actif, à inhiber le rétrogradage pendant la temporisation $T_a$.

La sortie de F1 peut avoir lieu :

     si F2 est activée, et on entre dans F2, ou

- si le kick down est activé, ou
- si la temporisation $T_a$ est terminée, ou
- si la demande de rétrogradage par les lois de passage disparaît.

Cette fonction F1 a pour but de temporiser légèrement le rapport descendant au croisement de la courbe de rétrogradage N vers N-1, de façon à analyser les conditions d'entrée dans la fonction F2, qui conduit à bloquer le rétrogradage tant que l'angle de papillon reste instable.

F2 consiste, lorsque les conditions suivantes sont réunies :

- le rapport descendant est demandé par les lois de passage, et
- $|\Delta\alpha_{pap}| >$ seuil-haut, et
- « kick down » est non activé.

     à inhiber le rapport descendant pendant une temporisation $T_{instable}$. $\Delta\alpha_{pap}$ représente la variation d'angle papillon, calculée par simple différenciation : $\Delta\alpha_{pap} = \alpha_{pa}p$ (t) - $\alpha_{pap}$ (t-$T_e$), où t est l'instant courant et $T_e$ la période d'échantillonnage, qui doit être faible. Seuil-haut est un seuil d'activation réglable en-dessous duquel la variation d'angle papillon déclenche la fonction F2.

La temporisation est initialisée ou ré initialisée lorsque: une nouvelle courbe de rétrogradages est croisée, ou lorsque $|\Delta\alpha_{pap}| >$ seuil-haut. Elle est maintenue à sa dernière valeur lorsque :

     seuil-bas < $|\Delta\alpha_{pap}| \leq$ seuil-haut.

Elle est décrémentée lorsque $|\Delta\alpha_{pap}| \leq$ seuil-bas. Ainsi, cette notion d'hystérésis et de ré-initialisation assure que le rapport restera bien bloqué tant que $\alpha_{pap}$ restera instable, avec une instabilité comprise entre une limite basse et une limite haute. De cette façon, cette procédure sera robuste par rapport aux éventuels bruits de mesure sur l'information $\alpha_{pap}$.

La sortie à partir de F2 peut avoir lieu si :

- la demande de rétrogradage par les lois disparaît, ou si
- la temporisation $T_{instable}$ disparaît, ou si
- le kick down est activé.

A la fin d'une fonction F1 ou F2, le rapport qui sera appliqué à la transmission 22 sera celui qui est demandé par les lois de passage, c'est-à-dire N.

## Revendications

1. Procédé de contrôle des rétrogradages des transmissions automatiques, consistant à déterminer des conditions dans lesquelles le rétrogradage passe d'un régime normal en fonction de lois de passage prédéterminées, à un régime spécial de rétrogradage, et détecter le passage audit régime spécial, puis en cas de détection du passage au régime spécial, rétrograder en passant du rapport courant (N) à un rapport inférieur, et bloquer ce rapport inférieur jusqu'à la disparition du régime spécial de rétrogradage, **caractérisé** en que, lorsqu'il est utilisé à des fins d'assistance au freinage, il comporte les étapes consistant à:

    a) pour déterminer des conditions dans lesquelles le rétrogradage ne se fait plus selon les lois de passage automatique normales de la boite de vitesse, mais selon un régime spécial, on utilise une valeur limite (N_turb_max) de régime de turbine du convertisseur de couple maximal, déterminée en logique floue, en-dessous de laquelle commence ledit régime spécial;
    b) Lorsqu'au freinage le régime de la turbine devient inférieur à ladite valeur limite, on effectue un rétrogradage anticipé d'un rapport de façon à passer du rapport N au rapport N-1, de sorte que le rétrogradage anticipé participe à l'effet de freinage.

2. Procédé selon la revendication 1, **caractérisé en ce que** pour déterminer ladite valeur limite (N_turb_max) de régime de turbine en logique floue, on tient compte de :

    - la décélération du véhicule représentative de l'intensité du freinage,

    - la durée du freinage,
    - une grandeur (PRG_Conducteur) représentative du style de conduite du conducteur,
    - une grandeur représentative de la déclivité de la route.

3. Procédé de contrôle selon l'une quelconque des revendications précédentes, **caractérisé en ce que** dès que la décélération du véhicule atteint un certain niveau prédéterminé, on calcule la distance parcourue par le véhicule, et pour sortir du régime spécial de rétrogradage, on débloque le rapport courant, soit:

    - lorsque le véhicule a parcouru une certaine distance prédéterminée avec l'ouverture ($\alpha_{pap}$) de l'organe de régulation de l'admission de combustible au moteur restée stable, ou
    - lorsque le régime de rotation du moteur devient trop élevé, ou
    - lorsque la courbe de rétrogradage N/N-1 est croisée, ou
    - lorsque le conducteur actionne manuellement le levier de vitesses pour sélectionner un rapport supérieur.

4. Procédé de contrôle des rétrogradages selon l'une quelconque des revendications précédentes, et utilisé à des fins d'assistance à l'accélération, **caractérisé en ce qu'**il comporte des étapes consistant à:

    a) au croisement d'une courbe de rétrogradage, lancer une première temporisation ($T_a$) de courte durée, pendant laquelle le rétrogradage est inhibé et le rapport courant N est conservé;
    b) pendant ladite première temporisation ($T_a$), analyser la stabilité de l'accélérateur ou de l'angle de papillon ($\alpha_{pap}$) en fonction du temps;
    c) en cas de stabilité supérieure à un seuil prédéterminé, sélectionner le rapport qui correspond au point courant dans le plan ($\alpha_{pap}$, vitesse du véhicule), sinon, lancer une seconde temporisation ($T_{instable}$), pendant laquelle le rapport N est toujours conservé.

5. Procédé de contrôle selon la revendication 4, **caractérisé en ce que** la seconde temporisation ($T_{instable}$) est maintenue et le rapport N conservé, tant que l'instabilité ($|\Delta\alpha_{pap}|$) est comprise entre un seuil bas et un seuil haut d'instabilité prédéterminés.

6. Procédé de contrôle selon l'une des revendications 4 ou 5, **caractérisé en ce que** lorsque la seconde temporisation ($T_{instable}$) est écoulée, le rapport correspondant au point courant dans le plan ($\alpha_{pap}$, $V_{veh}$) de la cartographie des changements de rapports selon le régime normal est sélectionné.

7. Procédé de contrôle selon l'une des revendications 4 à 6, **caractérisé en ce que** le blocage pour instabilité de l'angle d'ouverture de papillon est prioritaire par rapport au blocage résultant de la temporisation d'attente.

## Claims

1. A process for controlling the downshifts of automatic transmissions, which comprises determining conditions under which the downshift changes from a normal mode of operation in dependence on predetermined change laws to a special downshift mode, and detecting the change to said special mode, then in the case of detection of the change to the special mode, downshifting by going from the current gear ratio (N) to a lower gear ratio and blocking said lower gear ratio until the special downshift mode disappears, **characterised in that** when it is used for braking assistance purposes it includes the steps comprising:

   a) for determining conditions under which the downshift no longer takes place in accordance with the normal automatic change laws of the gearbox but in accordance with a special mode, use is made of a limit value (N_turb_max) in respect of the mode of operation of the turbine of the torque converter which is the maximum, determined in fuzzy logic, below which said special mode begins;

   b) when upon braking the mode of operation of the turbine becomes lower than the limit value, an advance downshift is effected by a gear ratio so as to go from the gear ratio N to the gear ratio N-1, in such a way that the advance downshift participates in the braking effect.

2. A process according to claim 1 **characterised in that** for determining said limit value (N_turb_max) in respect of the turbine mode in fuzzy logic, account is taken of:

   - deceleration of the vehicle which is representative of the intensity of braking,

   - the duration of braking,

   - a parameter (PRG_driver) representative of the style of driving of the driver, and

   - a parameter representative of the gradient of the road.

3. A control process according to any one of the preceding claims **characterised in that** once the deceleration of the vehicle reaches a certain predetermined level the distance covered by the vehicle is calculated and to come out of the special downshift mode the current gear ratio is unblocked, namely:

   - when the vehicle has covered a certain predetermined distance with the opening ($\alpha_{pap}$) of the member for regulating the intake of fuel to the engine having remained stable, or

   - when the engine speed becomes excessively high, or

   - when the downshifting curve N/N-1 is crossed, or

   - when the driver manually operates the gear lever to select a higher gear.

4. A process for controlling the downshifts in accordance with any one of the preceding claims and used for the purposes of assisting with acceleration, **characterised in that** it includes steps comprising:

   a) at the crossing of a downshifting curve starting a first time delay (Ta) of short duration, during which downshifting is inhibited and the current gear ratio N is retained;

   b) during said first time delay (Ta) analysing the stability of the accelerator or the throttle valve angle ($\alpha_{pap}$) as a function of time; and

   c) in the event of stability greater than a predetermined threshold, selecting the gear ratio which corresponds to the current point in the diagram ($\alpha_{pap}$, speed of the vehicle) if not, starting a second time delay ($T_{unstable}$), during which the gear ratio N is still retained.

5. A control process according to claim 4 **characterised in that** the second time delay ($T_{unstable}$) is maintained and the gear ratio N retained as long as the instability ($|\Delta\alpha_{pap}|$) is between a predetermined low stability threshold and high stability threshold.

6. A control process according to one of claims 4 and 5 **characterised in that** when the second time delay ($T_{unstable}$) has elapsed the gear ratio corresponding to the current point in the diagram ($\alpha_{pap}$, $V_{veh}$) of the mapping in respect of the gear changes in accordance with the normal mode of operation is selected.

7. A control process according to one of claims 4 to 8 **characterised in that** blocking for instability of the throttle valve opening angle has priority with respect to blocking resulting from the waiting time delay.

**Patentansprüche**

**1.** Verfahren zur Steuerung des Herunterschaltens von automatischen Getrieben, bestehend aus der Bestimmung der Bedingungen, unter denen das Herunterschalten von einem normalen Betriebszustand als Funktion der festgelegten Vorschriften für den Gangwechsel in einen besonderen Betriebszustand des Herunterschaltens übergeht und aus der Ermittlung des Übergangs in diesen besonderen Betriebszustand, wobei im Fall der Feststellung des Übergangs in den besonderen Betriebszustand vom eingelegten Gang (N) in einen niedrigeren Gang heruntergeschaltet wird und dieser niedrigere Gang blockiert wird bis zum Verschwinden des besonderen Betriebszustandes des Herunterschaltens, **dadurch gekennzeichnet, dass** für den Einsatz zur Unterstützung des Bremsvorgangs es die folgenden Verfahrensschritte aufweist:

> a) zur Bestimmung der Bedingungen unter denen das Herunterschalten nicht mehr nach den normalen Vorschriften für den automatischen Gangwechsel des Getriebes erfolgt, sondern gemäss einem besonderen Betriebszustand, wird ein Grenzwert (N_turb_max) der maximalen Drehzahl der Turbine des Drehmomentwandlers verwendet, der bestimmt wird mittels einer Unschärfelogik und unterhalb dessen der besondere Betriebszustand einsetzt;
> b) wenn während des Bremsvorgangs die Drehzahl der Turbine unter diesen Grenzwert fällt, erfolgt ein vorgezogenes Herunterschalten eines Ganges, derart, dass vom Gang N in den Gang N-1 geschaltet wird, sodass das vorgezogene Herunterschalten zum Bremsvorgang beiträgt.

**2.** Verfahren nach Anspruch 1, **dadurch gekennzeichnet, dass** zur Bestimmung des Grenzwertes (N_turb_max) der Drehzahl der Turbine mittels einer Unschärfelogik berücksichtigt wird:

> - die Verzögerung des Fahrzeugs als Resultat der Stärke des Bremsvorgangs
> - die Bremsdauer
> - eine Grösse (PRG_Fahrer) als Wert für den Fahrstil des Fahrers
> - eine Grösse für das Gefälle der Strasse.

**3.** Verfahren zur Steuerung nach einem der vorhergehenden Ansprüche, **dadurch gekennzeichnet, dass**, sowie die Verzögerung des Fahrzeugs einen vorgegebenen Wert erreicht, die vom Fahrzeug zurückgelegte Entfernung berechnet wird und dass, um den besonderen Betriebszustand des Herunterschaltens zu verlassen, der eingelegte Gang freigegeben wird, entweder :

> - wenn das Fahrzeug eine vorgegebene Entfernung zurückgelegt hat mit unveränderter Öffnung ($\alpha_{pap}$) des Steuerteils für die Zufuhr von Kraftstoff zum Motor oder
> - wenn die Drehzahl des Motors zu hoch ist oder
> - wenn die Kurve des Herunterschaltens N/N-1 gekreuzt wird oder
> - wenn der Fahrer manuell den Wählhebel betätigt um in einen höheren Gang zu schalten.

**4.** Verfahren zur Steuerung des Herunterschaltens nach einem der vorhergehenden Ansprüche, das verwendet wird zur Unterstützung einer Beschleunigung, **dadurch gekennzeichnet, dass** es die folgenden Verfahrensschritte aufweist:

> a) beim Kreuzen einer Kurve des Herunterschaltens wird eine erste Verweilzeit ($T_a$) kurzer Dauer eingeführt, während der das Herunterschalten verhindert wird und der eingelegte Gang N beibehalten wird;
> b) während der ersten Verweilzeit ($T_a$) wird die Stabilität des Gaspedals oder der Winkel ($\alpha_{pap}$) der Drosselklappe als Funktion der Zeit analysiert;
> c) in dem Fall, in dem die Stabilität oberhalb eines vorgegebenen Schwellwertes liegt wird ein Gang gewählt, der dem aktuellen Punkt in der ebenen Darstellung ($\alpha_{pap}$, Geschwindigkeit des Fahrzeugs) entspricht, oder, wenn dies nicht der Fall ist, wird eine zweite Verweilzeit ($T_{instable}$) eingeführt, während der der Gang N immer beibehalten wird.

**5.** Verfahren zur Steuerung nach Anspruch 4, **dadurch gekennzeichnet, dass** die zweite Verweilzeit ($T_{instable}$) aufrechterhalten und der Gang N solange beibehalten wird, wie die Instabilität ($|\Delta\alpha_{pap}|$) zwischen einem unteren und einem oberen Schwellwert der Instabilität liegt.

**6.** Verfahren zur Steuerung nach einem der Ansprüche 4 oder 5, **dadurch gekennzeichnet, dass**, wenn die zweite Verweilzeit ($T_{instable}$) abgelaufen ist, der Gang gewählt wird, der dem aktuellen Punkt in der ebenen Kartographie ($\alpha_{pap}$, $V_{veh}$) für die Gangwechsel gemäss dem normalen Betriebszustand entspricht.

**7.** Verfahren zur Steuerung nach einem der Ansprüche 4 bis 6, **dadurch gekennzeichnet, dass** die Blockierung auf grund der Instabilität der Öffnung der Drosselklappe Vorrang hat vor der Blockierung auf grund der abzuwartenden Verweilzeit.

FIG.1

FIG.2

| n_turb_max |
| --- |
| temps_frein |

| Prg conducteur | | ECO | | MEDIUM | | SPORT | |
| --- | --- | --- | --- | --- | --- | --- | --- |
| Force_dif | | Négative | autre | Négative | autre | Négative | autre |
| $\delta_{veh}$ | Faible | Moyen | Faible | Moyen | Faible | Moyen | Moyen |
| | | Large | Large | Moyen | Moyen | Moyen | Court |
| | Moyenne | Moyen | Moyen | Moyen | Moyen | Grand | Grand |
| | | Moyen | Moyen | Moyen | Court | Moyen | Court |
| | Forte | Grand | Moyen | Grand | Grand | Grand | Grand |
| | | Moyen | Court | Court | Court | Court | Court |

A

## FIG.3

EP 0 991 880 B1

## FIG.4

## FIG.5